# EUROPÄISCHE PATENTSCHRIFT

(11) **EP 1 334 019 B1**
(45) Veröffentlichungstag und Bekanntmachung des Hinweises auf die Patenterteilung: **14.07.2004**
(21) Anmeldenummer: 01992665.8
(22) Anmeldetag: 31.10.2001
(51) Int. Cl.: B61H 1/00

(54) **VERFAHREN UND VORRICHTUNG ZUR STEUERUNG DER DRUCKMITTELVERSORGUNG BEI SCHIENENFAHRZEUGEN (KOMPRESSOR-MANAGEMENT)**
METHOD AND DEVICE FOR CONTROLLING THE SUPPLY OF A PRESSURE MEDIUM ON RAIL VEHICLES (COMPRESSOR-MANAGEMENT)
PROCEDE ET DISPOSITIF POUR COMMANDER L'ALIMENTATION EN FLUIDE SOUS PRESSION DANS DES VEHICULES SUR RAILS (GESTION DES COMPRESSEURS)

(30) Priorität: 02.11.2000 DE 10054152
(43) Veröffentlichungstag der Anmeldung: 13.08.2003
(73) Patentinhaber: KNORR-BREMSE Systeme für Schienenfahrzeuge GmbH, 80809 München (DE)
(72) Erfinder: SCHMID, Ralf-Rainer, 93161 Sinzing (DE); REINICKE, Stefan, 80992 München (DE)
(86) Internationale Anmeldenummer: PCT/EP2001/012644
(87) Internationale Veröffentlichungsnummer: WO 2002/036407

(56) Entgegenhaltungen:
- EP-A- 0 829 405
- DE-A- 19 837 100
- GB-A- 182 333
- US-A- 4 502 842
- US-A- 5 108 263
- DATABASE WPI Section PQ, Week 198638 Derwent Publications Ltd., London, GB; Class Q56, AN 1986-250530 XP002199825 & SU 1 208 309 A (SVERD MINING INST), 30. Januar 1986 (1986-01-30)

## Beschreibung

Die Erfindung betrifft ein Verfahren zur Steuerung der Druckmittelversorgung bei Schienenfahrzeugen gemäß dem Oberbegriff des Anspruchs 1 sowie eine diesbezügliche Vorrichtung gemäß dem Oberbegriff des Anspruchs 13.

Aus der DE 198 48 995 A1 der Anmelderin geht eine normgemäß durch alle Schienenfahrzeuge eines Zugverbands verlaufende und an den Kopplungsstellen verbindbare Hauptluftbehälterleitung hervor. Diese gemeinsame Druckmittelleitung ist an Hauptluftbehältern angeschlossen, die je einem Schienenfahrzeug zugeordnet sind. Die Hauptluftbehälter speichern das für den Betrieb der Bremseinrichtungen sowie anderer druckmittelbetriebener Aggregate - wie Türöffnungseinrichtungen - erforderliche Druckmittel in Form von Preßluft. Neben der Hauptluftbehälterleitung verläuft meist auch eine zweite sogenannte Hauptluftleitung durch den Zugverband. Diese über ein Zugbremsventil gespeiste Hauptluftleitung dient jedoch lediglich zum Ansteuern der Bremseinrichtungen des Zugverbandes, d.h. zur Übertragung des Bremssignals. Insoweit tragen die durch die Hauptluftleitung angesteuerten Aggregate nicht signifikant zum Druckmittelverbrauch innerhalb des Zugverbandes bei.

Zur Speisung des hinsichtlich des Druckmittelbedarfs wesentlichen Systems der Hauptluftbehälterleitung mit Druckmittel werden gewöhnlich Kompressoren verwendet. Ein Kompressor setzt in bekannter Weise mittels einer mechanischen Antriebsenergie von der Atmosphäre angesaugte Luft durch Verdichtung unter einen Überdruck. Die dezentral auf jedem einzelnen Schienenfahrzeug des Zugverbandes vorhandenen Kompressoren stehen durch die gemeinsame Hauptluftbehälterleitung untereinander in druckmittelschlüssiger Verbindung.

Die Steuerung dieser Druckmittelversorgung innerhalb des Zugverbandes kann in allgemein bekannter Weise durch eine unabhängige dezentrale Druckregelung erfolgen. Hierbei ist über ein jedem lokalen Kompressor zugeordneten lokalen Drucksensor der Zustand eines Druckmittelbedarfs innerhalb des Zugverbandes ermittelbar. Ein Druckmittelbedarf entsteht dann, wenn der Druck in der Hauptluftbehälterleitung unter einem vorgegebenen Grenzdruck abfällt. In diesem Falle schaltet ein mit dem lokalen Drucksensor eingangsseitig verbundenes Schaltmittel den lokalen Kompressor ein, um den Druckmittelbedarf zu decken. Das Schaltmittel schaltet den Kompressor dann wieder aus, wenn über den Drucksensor das Erreichen eines ebenfalls vorgegebenen Maximaldrucks signalisiert wird. Dieser sogenannte Druckwächter beruht damit auf dem Prinzip einer Zweipunktregelung.

Der wesentliche Nachteil der bekannten dezentralen Zweipunktregelung ist das unkoordinierte Zusammenspiel der Kompressoren innerhalb des Zugverbands. Zwar wird durch die Dezentralisierung eine autarke Druckmittelversorgung für jedes Schienenfahrzeug erzielt, was in einfachster Weise eine frei wählbare Aneinanderkopplung von Schienenfahrzeugen ermöglicht; gleichwohl führt das damit einhergehende unkoordinierte Zusammenspiel auch zu einem erhöhten Verschleiß der Kompressoren, was einen hohen Aufwand an Wartung und eine verkürzte Lebensdauer der Kompressoren verursacht. So können beispielsweise Toleranzunterschiede bei Drucksensoren im Bezugssystem des Zugverbands dazu führen, daß stets nur ein einziger Kompressor zur Auffüllung eines geringen während des Betriebes auftretenden Druckmittelbedarfs beansprucht wird, dessen zugeordneter Druckwächter auf einen noch im Toleranzfeld liegenden, aber minimalen Grenzdruckwert auslöst. Dieser Kompressor wird dann über seine gesamte Lebensdauer vergleichsweise häufiger als die übrigen Kompressoren beansprucht. Diese einseitige Beanspruchung eines Kompressors erzeugt einen erhöhten Verschleiß bei dem Kompressor, so dass dieser auch in kürzeren Zeitabständen zu warten ist.

Andererseits werden bei einem größeren Druckabfall unterhalb des Grenzdrucks sofort alle Kompressoren gemeinsam eingeschaltet, um den entstandenen Druckmittelbedarf zu decken. Ein Betrieb aller Kompressoren ist jedoch in den meisten Fällen nicht erforderlich, da bereits einige wenige Kompressoren innerhalb kürzester Zeit den Maximaldruck herbeiführen können. Die Anlaufphase aller Kompressoren bei einem gemeinsamen Einschalten führt zu einem Energieverbrauch sowie zu unnötigen Spitzenbelastungen im Energiesystem des Zugverbands.

Aus der EP 0 829 405 A2 ist ein dementsprechendes Verfahren sowie eine Vorrichtung zur Steuerung der Druckmittelversorgung bei Schienenfahrzeugen bekannt. Es erfolgt hier eine synchrone Druckmittelbeaufschlagung einer allen Kompressoren gemeinsamen Druckleitung über Regelventile, die von einem Datenbus aus angesteuert werden.

Aus der DE 198 37 100 A1 ist ein System zur Ansteuerung von Kompressoren eines Zugverbandes bekannt, bei dem mehrere Kompressoren unterschiedlicher Leistung vorgesehen sind, welche entsprechend ihres Leistungsvermögens nacheinander oder einzeln in Betrieb genommen werden, so dass jeder jeweils aktivierte Kompressor in einem optimalen Auslastungsverhältnis von Betriebszeit zu Ruhezeit arbeitet. Ein Nachteil dieser Lösung besteht darin, dass zum Nachfüllen eines geringen Druckunterschiedes meistens nur der Kompressor mit der geringsten Leistung beansprucht wird, wogegen die Kompressoren mit den höheren Leistungen weniger häufig in Betrieb genommen werden. Hieraus resultiert bei der Anwendung innerhalb eines Zugverbands ein enormes Missvediältnis.

Es ist daher die Aufgabe der vorliegenden Erfindung, die Steuerung der Druckmittelversorgung bei Schienenfahrzeugen dahingehend weiterzuverbessern, dass eine möglichst ausgeglichene Nutzung der im Zugverband vorhandenen Kompressoren erzielt wird, um insbesondere den Verschleiß und den Energieverbrauch der Kompressoren zu minimieren.

Die Aufgabe wird durch ein Verfahren gemäß Anspruch 1 gelöst. Bezüglich einer Vorrichtung wird die Aufgabe durch den Anspruch 12 gelöst. Die jeweils rückbezogenen abhängigen Ansprüche geben vorteilhafte Weiterbildungen der Erfindung wieder.

Die Erfindung schließt die verfahrenstechnische Lehre ein, dass entsprechend der Gesamtzahl der im Zugverband verfügbaren Kompressoren eine feste oder wechselnde Prioritätsreihenfolge für die Kompressoren definiert wird, wobei abhängig vom aktuellen Druckmittelbedarf nur diejenige Anzahl von Kompressoren gemäß der Reihenfolge ihrer Priorität in Betrieb genommen wird, welche zur Deckung des aktuellen Druckmittelbedarfs erforderlich ist.

Der Vorteil des erfindungsgemäßen Steuerungsverfahrens für die Kompressoren des Zugverbandes liegt in dem bedarfsgerechten Ein- und Ausschalten der benötigten Kompressoren, das prioritätsabhängig gemäß einer festgelegten, aber wahlweise frei änderbaren Reihenfolge vorgenommen wird. Eine Änderung der Prioritätsreihenfolge kann unter bestimmten auslösenden Bedingungen erfolgen, die an späterer Stelle ausführlicher beschrieben werden. Da nicht mehr alle Kompressoren gleichberechtigt zur Druckmittelversorgung beitragen, kann die Einund Ausschalthäufigkeit signifikant gesenkt werden, was sich verschleißminimierend und energiesparend auswirkt. Um beispielsweise einen konstanten Druckmittelverbrauch zu bedienen, laufen die prioritätshöchsten Kompressoren überwiegend konstant in ihrer optimalen Betriebstemperatur, bei welcher der Verschleiß gering ist. Ein geringer zusätzlicher Druckausgleich bei betriebsbedingten Druckschwankungen kann dann über den prioritätsnächsten Kompressor vorgenommen werden, der jedoch nur bedarfsweise zugeschaltet wird.

Vorzugsweise wird für einen solchen Ausgleich von betriebsbedingten Druckschwankungen in der Hauptluftbehälterleitung bei einem Druckabfall unter einen definierten unteren Grenzwert zusätzlich zu bereits eingeschalteten Kompressoren zunächst der Kompressor mit der nächsthöheren Priorität in Betrieb genommen. Bei Erreichen eines Maximaldrucks wird dann in analoger Weise von den eingeschalteten Kompressoren zunächst der Kompressor mit der nächstniedrigen Priorität wieder außer Betrieb genommen. Dieses Steuerungskonzept anhand zweier Druckgrenzwerte lehnt sich demnach an das Prinzip der Zweipunktregelung an.

Gemäß einer weiteren die Erfindung verbessernden Maßnahme werden bei Inbetriebnahme der Druckmittelversorgung des Zugverbandes die Kompressoren unterschiedlich zeitverzögert eingeschaltet. Bei Erreichen des Maximaldrucks werden diese dann wieder unterschiedlich zeitverzögert ausgeschaltet, wobei das Ein- bzw. Ausschalten nach dem Ablauf einer abhängig von der Priorität jedes Kompressors festgesetzten Zeitdauer erfolgt. Die zeitliche Einschaltverzögerung verhindert eine nachteilige Leistungsspitze im Energieverbrauch, so daß ein sicheres Anfahren der Kompressoren aus dem Stand heraus - beispielsweise bei einer Inbetriebnahme der Druckmittelversorgung nach einem Zusammenstellen des Zugverbands aus einzelnen Schienenfahrzeugen - erfolgen kann.

Zur Festlegung der Prioritätsreihenfolge der Kompressoren werden diese vorzugsweise bei unterschiedlichen individuellen unteren Grenzdrücken eingeschaltet und bei unterschiedlichen individuellen oberen Grenz drücken wieder ausgeschaltet. Dabei wird im wesentlichen der Kompressor mit der höchsten Priorität aufgrund des höchsten unteren Grenzdrucks zuerst eingeschaltet und aufgrund des höchsten oberen Grenzdrucks zuletzt wieder abgeschaltet, wobei die in der Priorität folgenden Kompressoren um je einen nächsthiedrigeren Differenzdruckwert versetzt ein- bzw. ausgeschaltet werden. Diese Druckabstaffelung ergibt auf einfache Weise die erfindungsgemäße Prioritätsreihenfolge für die Kompressoren und ermöglicht eine sukzessive belastungsoptimale Annäherung an den Maximaldruck der Druckmittelversorgung. Daneben ist es auch denkbar, die Prioritätsreihenfolee der Kompressoren anders - beispielsweise durch eine übergeordnete elektronische Steuereinrichtung - zu definieren. Die elektronische Steuereinrichtung kann dabei über einen durch den Zugverband verlaufenden Datenbus mit den Schaltmitteln aller Kompressoren zur Ansteuerung verbunden sein. Die Ansteuerung der Druckmittelversorgung innerhalb des Zugverbands kann demnach zentral von einer übergeordneten elektronischen Steuereinrichtung aus oder auch dezentral durch eine jedem Kompressor zugeordnete Steuereinheit erfolgen, wobei letzterenfalls eine aufeinander abgestimmte Einstellung erforderlich ist. Im einfachsten Falle kann die Steuereinheit als ein herkömmlicher Druckwächter am Kompressor ausgebildet sein, der zur Einstellung seiner Priorität verstellbar ist. Über einen gemeinsamen Datenbus ist hierbei eine vorteilhafte Master/Slave-Zuordnung und damit eine Zentralisierung der Steuerung möglich. Als Mittel zum dezentralen Festlegen einer Prioritätsreihenfolge eignet sich im einfachsten Falle auch ein direkt am Kompressor ausgebildeter elektrischer oder mechanischer Handwahlschalter oder dergleichen.

Die Prioritätsreihenfolge der Kompressoren kann nach der Zusammenstellung der Schienenfahrzeuge zu einem Zugverband unverändert definiert bleiben. Von besonderem Vorteil ist jedoch eine Wechselbarkeit der Prioritätsreihenfolge. Eine solche Umpriorisierung kann fest oder zufällig zeitgesteuert oder auch druckgesteuert, temperaturgesteuert oder feuchtigkeitsgesteuert oder auf eine andere geeignete Weise vorgenommen werden. Der Wechsel in der Prioritätsreihenfolge der Kompressoren bietet den Vorteil einer gleichmäßigen Streuung des Verschleißes und damit eine besonders ausgeglichene Nutzung aller zur Verfügung stehender Kompressoren. Extrem differierende Wartungsintervalle für Kompressoranlagen der Schienenfahrzeuge können insoweit vermieden werden. Der Wechsel der Prioritätsreihenfolge schafft also eine gleichmäßige Rotation in der Nutzungshäufigkeit der Kompressoren im Zugverband. Da hierdurch ein längerer Stillstand jedes Kompressors und damit eine absolute Abkühlung vermieden wird, kann auch eine verschleißverursachende Feuchtigkeitsabgabe von Kompressoren, welche in der Warmlaufphase auftritt, wirkungsvoll verhindert werden.

Vorzugsweise wird für einen zeitgesteuerten Wechsel der Prioritätsreihenfolge während des Betriebes der Druckmittelversorgung der Kompressor mit der höchsten Priorität bei Erreichen einer definierten ununterbrochenen Betriebsdauer in die niedrigste Priorität versetzt und damit ausgeschaltet, wobei dieser Kompressor durch einen Kompressor mit der nächsthöheren Priorität ersetzt wird. Daneben sind auch andere zeitgesteuerte Wechselmethoden denkbar. So kann ein Wechsel der Prioritätsreihenfolge auch an einen feststehenden Stunden- oder Datumswechsel als auslösendes Ereignis gekoppelt sein.

Im Falle eines alternativen druckgesteuerten Wechsels der Prioritätsreihenfolge während des Betriebes der Druckmittelversorgung kann der Kompressor mit der höchsten Priorität bei Erreichen eines definierten Umschaltdruckwerts innerhalb der Hauptluftbehälterleitung in die niedrigste Priorität versetzt werden und damit ausgeschaltet werden, wobei dieser Kompressor wiederum durch einen noch ausgeschalteten Kompressor mit der nächsthöheren Priorität ersetzt wird. Im einfachsten Falle kann der einen Wechsel in der Prioritätsreihenfolge auslösende Umschaltdruckwert beispielsweise nach einem signifikanten Druckabfall durch eine Abbremsung des Zugverbandes in den Stillstand bewirkt werden.

Für einen weiterhin denkbaren temperaturgesteuerten Wechsel der Prioritätsreihenfolge während des Betriebes der Druckmittelversorgung kann der Kompressor mit der höchsten Priorität bei Erreichen der Betriebstemperatur und nach Ablauf einer definierten Haltezeit in die niedrigste Priorität versetzt und damit ausgeschaltet werden, wobei dieser Kompressor wiederum durch einen noch ausgeschalteten Kompressor mit der nächsthöheren Priorität ersetzt wird. Der temperaturgesteuerte Wechsel stellt damit eine im Hinblick auf die Optimierung einer möglichst trockenen Betriebsweise der Kompressoren ausgerichtete Maßnahme dar.

Für einen alternativen feuchtigkeitsgesteuerten Wechsel der Prioritätsreihenfolge wird während des Betriebes der Druckmittelversorgung des Kompressors mit der höchsten Priorität bei Erreichen eines trockenen Betriebszustandes in die niedrigste Priorität versetzt wird und damit ausgeschaltet, wobei dieser Kompressor durch einen noch ausgeschalteten feuchten Kompressor mit der nächsthöheren Priorität ersetzt wird. Diese durch geeignete Sensoren erzielbare feuchtigkeitsabhängige Steuerung stellt damit eine weitere denkbare Möglichkeit im Hinblick auf die Optimierung einer möglichst trockenen Betriebsweise der Kompressoren dar.

Daneben sind auch noch andere Steuerungsmethoden für den Wechsel der Prioritätsreihenfolge denkbar, die auf geeignete Parameter in der Druckmittelversorgung Bezug nehmen, aus denen sich Verschleißursachen ableiten lassen. Auch eine Kombination mehrerer Steuerungsmethoden miteinander ist möglich.

Weitere die Erfindung verbessernde Maßnahmen sind in den abhängigen Ansprüchen angegeben oder werden nachfolgend gemeinsam mit der Beschreibung eines bevorzugten Ausführungsbeispiels der Erfindung anhand der einzelnen Figuren näher dargestellt.
Es zeigt:
- Fig. 1: eine schematische Darstellung eines Zugverbandes mit Mitteln für die erfindungsgemäße Druckmittelversorgung,
- Fig. 2: ein Verbrauchsdiagramm der erfindungsgemäßen Druckmittelversorgung bei betriebsbedingt konstantem Druckmittelverbrauch,
- Fig. 3: ein Schaltdiagramm zur Veranschaulichung einer durch gestaffelte Druckwerte geschaffenen Prioritätsreihenfolge,
- Fig. 4: ein Schaltdiagramm zur Veranschaulichung einer zeitversetzten Verzögerung beim Ein- und Ausschalten der Kompressoren, und
- Fig. 5: ein typisches Trocknungsverlaufsdiagramm eines Kompressors.

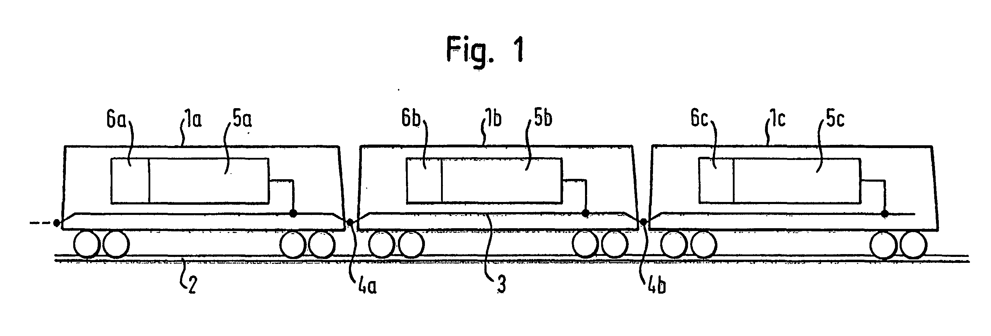

Ein Zugverband besteht nach Figur 1 aus mehreren Schienenfahrzeugen, von denen hier beispielhaft nur drei Schienenfahrzeuge 1a bis 1c gezeigt sind, welche sich auf Schienen 2 fortbewegen lassen und mechanisch miteinander gekoppelt sind. Die Druckmittelversorgung des Zugverbands, die insbesondere für den Betrieb der Bremsanlage erforderlich ist, erfolgt über eine durch alle Schienenfahrzeuge 1a bis 1c durch den gesamten Zugverband verlaufende Hauptluftbehälterleitung 3. Die Hauptluftbehälterleitung 3 ist abschnittsweise an den Verbindungsstellen benachbarten Schienenfahrzeuge 1a zu 1b oder 1b zu 1c über Druckmittelkupplungen 4a bzw. 4b druckmittelschlüssig zusammengeschaltet. Die Beaufschlagung der Hauptluftbehälterleitung 3 mit Preßluft erfolgt über Kompressoren 5a bis 5c, die je einem Schienenfahrzeug 1a bis 1c zugeordnet sind und deren Behälter mit der Hauptluftbehälterleitung 3 in Verbindung steht. Insoweit ist jeder Behälter der Kompressoren 5a bis 5c über die gemeinsame Hauptluftbehälterleitung 3 kurzgeschlossen, so daß in diesem System dasselbe Druckniveau herrscht. Jeder Kompressor 5a bis 5c ist in diesem Ausführungsbeispiel eingangsseitig mit einer eigenen Steuereinheit 6a bis 6c ausgestattet, so daß hier eine dezentral angeordnete Ansteuerung der Kompressoren 5a bis 5c erfolgt. Die Steuereinheiten 6a bis 6c umfassen nicht weiter im Detail dargestellte Schaltmittel zum Ein- und Ausschalten der Kompressoren 5a bis 5c sowie damit zusammenwirkende Mittel zum Bestimmen einer Prioritätsreihenfolge für die Kompressoren 5a bis 5c innerhalb des Zugverbands, hier beispielsweise durch einen manuell einstellbaren automatischen Druckwächter.

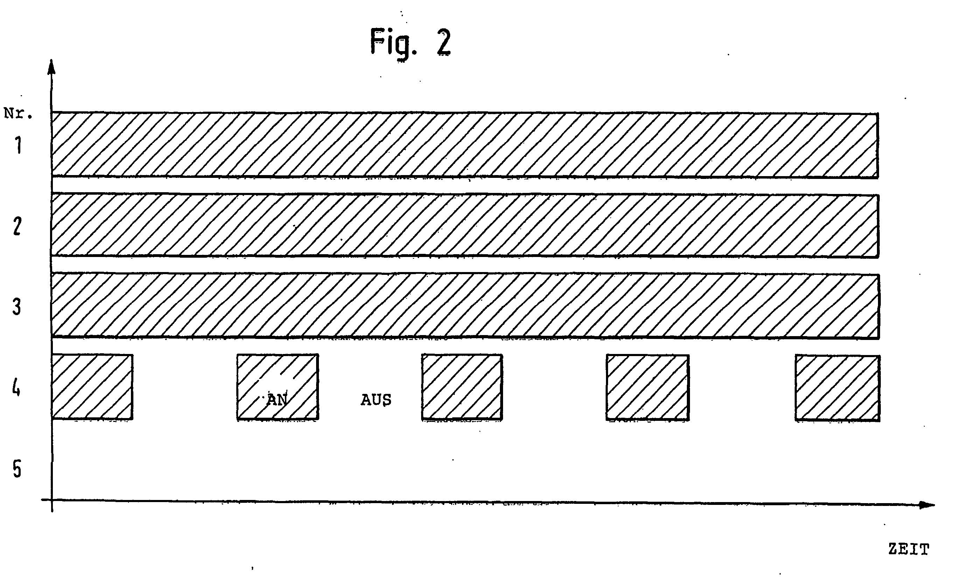

Mit diesen Mitteln ist eine aus Figur 2 ersichtliche Ansteuerung anhand einer Prioritätsreihenfolge möglich. Dabei erhält jeder Kompressor des Zugverbandes eine Priorität 1 bis 5 als Kennung (Ordinatenachse des Verbrauchsdiagramms) die eine Prioritätsreihenfolge ergibt. Abhängig vom aktuellen Druckmittelbedarf wird nur diejenige Anzahl von Kompressoren gemäß der Reihenfolge ihrer Priorität 1 bis 5 in Betrieb genommen, die zur Deckung des aktuellen Druckmittelbedarfs erforderlich ist. Bei dem betrachteten Beispiel wird ein über die Zeit konstanter Druckmittelverbrauch angenommen, zu dessen Deckung die Leistung von 3 bis 4 Kompressoren erforderlich ist. Gemäß der prioritätsbasierenden Steuerung der Druckmittelversorgung wird dieser Bedarf durch einen 100%-igen Betrieb der Kompressoren mit der Priorität 1 bis 3 gedeckt. Die ersten drei Kompressoren sind also im Dauerbetrieb. Die restlichen 40% Bedarf wird durch den nächst prioritätshöheren Kompressor mit der Priorität 4 gedeckt, der über die Zeit gesehen (Abszissenachse des Verbrauchsdiagramms) durch wechselndes Ein- und Ausschalten 40%-ig in Betrieb genommen werden. Der übrige Kompressor mit der niedrigsten Priorität 5 braucht hier nicht benutzt zu werden. Zum Wiederauffüllen des - hier konstanten - betriebsbedingten Druckmittelverbrauchs wird konkret bei einem dadurch verursachten Druckabfall unter einen definierten unteren Grenzwert zusätzlich zu bereits eingeschalteten Kompressoren der Priorität 1 bis 3 zunächst der Kompressor mit der nächsthöheren Priorität 4 in Betrieb genommen. Bei Erreichen eines Maximaldrucks wird in analoger Weise von den dann eingeschalteten Kompressoren der Priorität 1 bis 4 zunächst der Kompressor mit der nächstniedrigen Priorität 4 außer Betrieb genommen.

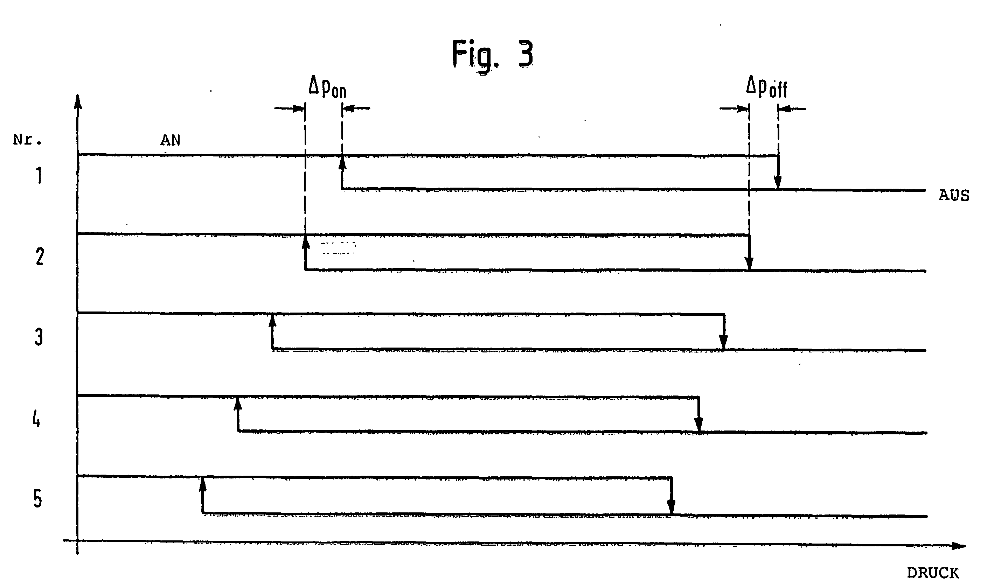

Gemäß Figur 3 werden zur Festlegung der Prioritätsreihenfolge 1 ... 5 (Ordinatenachse des Schaltdiagramms) die Kompressoren bei unterschiedlichen individuellen unteren Grenzdrücken, die um den Betrag Δpₒₙ differieren (Abszissenachse des Schaltdiagramms), während des Betriebes zum Wiederauffüllen eingeschaltet. Analog dazu werden die Kompressoren auch bei unterschiedlichen individuellen oberen Grenzdrücken ausgeschaltet, die um den Betrag Δp_{off} differieren. Bei Inbetriebnahme ohne Druck erfolgt aber zunächst ein Auffüllen unter Einsatz aller Kompressoren bis zum höchsten oberen Grenzdruck, der durch den Kompressor mit der Priorität 5 bewirkt wird. Die Kompressoren schalten aufgrund ihrer um den Betrag Δp_{off} differierenden oberen Grenzdrücke schrittweise ab. Zuerst schaltet der Kompressor mit der Priorität 1 ab. Bei einem Wiederauffüllen während des Betriebes wird der Kompressor mit der niedrigsten Priorität 5 zuerst wieder eingeschaltet. Die in der Priorität 4 bis 1 folgenden Kompressoren werden um je einen nächsthiedrigeren Differenzdruckwertschritt mit dem Betrag Δpₒₙ versetzt eingeschaltet, falls dies für ein Wiederauffüllen mit Druckmittel erforderlich ist.

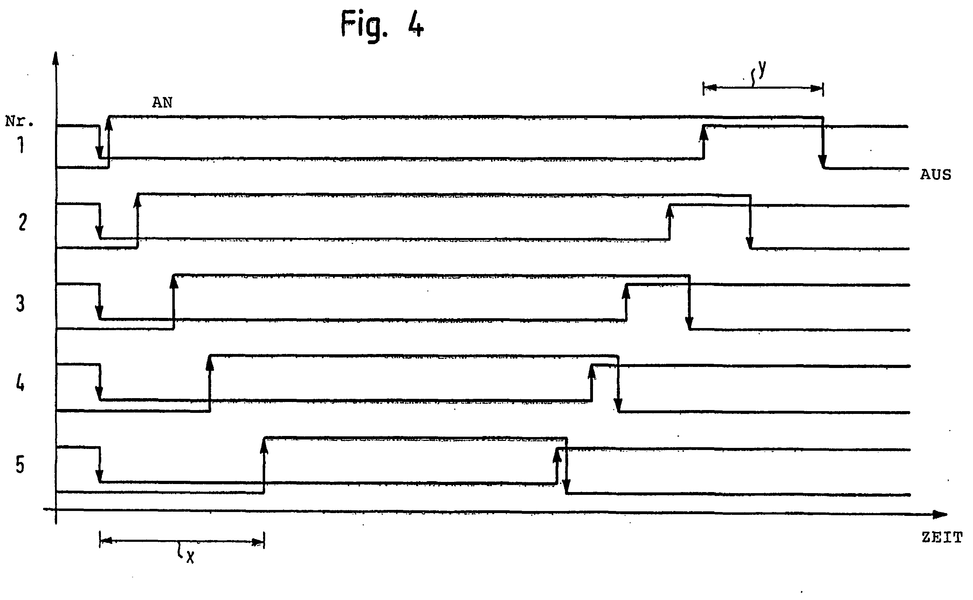

Bei Inbetriebnahme der Druckmittelversorgung werden nach Figur 4 die Kompressoren des Zugverbandes unterschiedlich zeitverzögert eingeschaltet, um Leistungsspitzen in der Energieversorgung der Kompressoren zu vermeiden, was aus dem individuell unterschiedlichen Betrag der Einschaltzeitverzögerung x (benachbart zur Ordinatenachse des Schaltdiagramms) hervorgeht. Analog hierzu werden die Kompressoren bei Erreichen des oberen Grenzdrucks wieder um einen individuell unterschiedlichen Betrag einer Ausschaltzeitverzögerung y ausgeschaltet.

Das Ein- bzw. Ausschalten erfolgt dabei nach dem Ablauf einer abhängig von der Priorität 1 bis 5 jedes Kompressors festgesetzten individuellen Zeitdauer, um insoweit eine prioritätsabhängige Staffelung zu schaffen.

Damit eine einseitige Belastung von Kompressoren mit höheren Prioritäten 1, 2, u.a. vermieden wird, erfolgt zusätzlich ein rotierender Wechsel der Prioritätsreihenfolge der Kompressoren. Für einen zeitgesteuerten Wechsel der Prioritätsreihenfolge während des Betriebes der Druckmittelversorgung kann der Kompressor mit der höchsten Priorität 1 bei Erreichen einer definierten ununterbrochenen Betriebsdauer in die niedrigste Priorität 5 versetzt und damit im Nicht-Bedarfsfall auch ausgeschaltet werden. Die übrigen Kompressoren rücken bezüglich ihrer Priorität entsprechend nach.

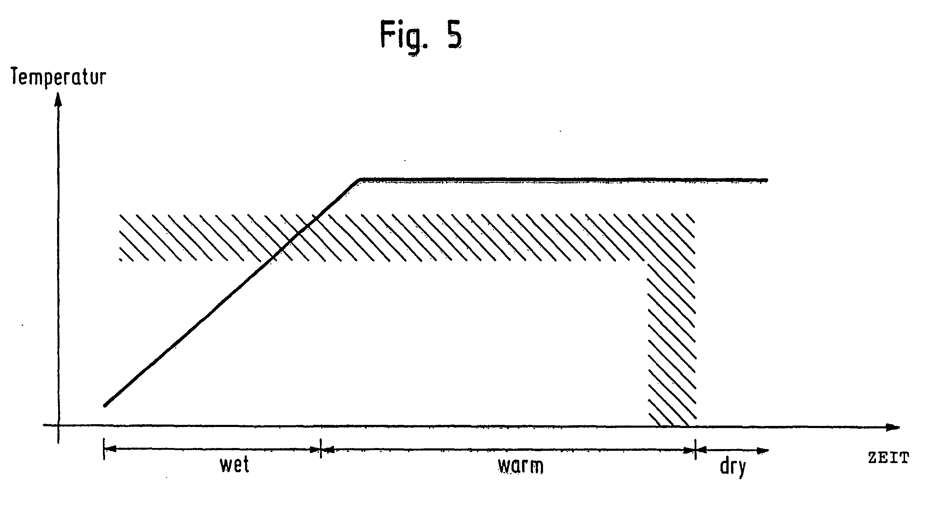

Unter Bezugnahme auf Figur 5 kann die Betriebsdauer eines Kompressors bei diesem zeitgesteuerten Wechsel der Prioritätsreihenfolge mindestens anhand der Zeit festgelegt werden, die dieser benötigt, um von einer feuchten Aufwärmphase "wet" über eine Warmphase "warm" in einen trockenen Zustand "dry" zu kommen. Hierdurch können alle Kompressoren im Zugverband trocken gehalten werden, was einem Verschleiß des Druckversorgungssystems aufgrund Feuchtigkeit entgegenwirkt. Einen Feuchtigkeitsabgabe (Schraffur) des Kompressors erfolgt über die Aufwärmphase "wet" und die Warmphase "warm".

Die Erfindung ist nicht beschränkt auf das vorstehend beschriebene bevorzugte Ausführungsbeispiel. Es sind vielmehr auch Abwandlungen hiervon denkbar, die trotz anders gearteter Ausführung in den durch die Ansprüche definierten Schutzbereich eingreifen. Insbesondere ist die Erfindung nicht beschränkt auf einen zeitgesteuerten Wechsel der Prioritätsreihenfolge. Dieser kann ebenso auch druckgesteuert, temperaturgesteuert, feuchtigkeitsgesteuert oder in anderer geeigneter Weise erfolgen. Weiterhin sind auch verschiedene zentrale oder dezentrale Steuerungsarten für die Festlegung der Prioritätsreihenfolge denkbar.

## Patentansprüche

1. Verfahren zur Steuerung der Druckmittelversorgung bei Schienenfahrzeugen, welche innerhalb eines Zugverbandes miteinander mechanisch und druckmittelschlüssig gekoppelt werden, wobei die Druckmittelversorgung über eine durch alle Schienenfahrzeuge (1a bis 1c) verlaufende gemeinsame Hauptluftbehälterleitung (3) hergestellt wird, die über mehrere im wesentlichen in jedem Schienenfahrzeug (1a bis 1c) einzeln vorgesehene Kompressoren (5a bis 5c) mit Druckmittel gespeist wird,
**dadurch gekennzeichnet, daß** entsprechend der Gesamtanzahl der im Zugverband verfügbaren Kompressoren (5a bis 5c) eine Prioritätsreihenfolge für die Kompressoren (5a bis 5c) definiert wird, wobei abhängig vom aktuellen Druckmittelbedarf nur diejenige Anzahl von Kompressoren (5a bis 5c) gemäß der Reihenfolge ihrer Priorität in Betrieb genommen wird, welche zur Deckung des aktuellen Druckmittelbedarfs erforderlich ist, wobei femer ein Wechsel in der Prioritätsreihenfolge der Kompressoren (5a bis 5c) fest oder zufällig zeitgesteuert, druckgesteuert, temperaturgesteuert oder feuchtigkeitsgesteuert vorgenommen wird.

2. Verfahren nach Anspruch 1,
**dadurch gekennzeichnet, daß** zum Wiederauffüllen von betriebsbedingten Druckmittelverbräuchen bei einem damit verbundenen Druckabfall in der Hauptluftbehälterleitung (3) unter einen definierten unteren Grenzwert zusätzlich zu bereits eingeschalteten Kompressoren (5a, 5b) zunächst der Kompressor (5c) mit der nächsthöheren Priorität in Betrieb genommen wird, und daß bei Erreichen eines oberen Grenzdrucks in analoger Weise von den eingeschalteten Kompressoren (5a bis 5c) zunächst der Kompressor (5c) mit der nächstniedrigen Priorität wieder außer Betrieb genommen wird.

3. Verfahren nach Anspruch 1 oder 2,
**dadurch gekennzeichnet, daß** bei Inbetriebnahme der Druckmittelversorgung des Zugverbandes die Kompressoren (5a bis 5c) unterschiedlich zeitverzögert eingeschaltet werden und bei Erreichen des oberen Grenzdrucks wieder unterschiedlich zeitverzögert ausgeschaltet werden, wobei das Ein- bzw. Ausschalten nach dem Ablauf einer abhängig von der Priorität jedes Kompressors (5a bis 5c) festgesetzten Zeitdauer erfolgt.

4. Verfahren nach einem der vorstehenden Ansprüche,
**dadurch gekennzeichnet, daß** zur Festlegung der Prioritätsreihenfolge der Kompressoren (5a bis 5c), diese bei unterschiedlichen individuellen unteren Grenzdrücken eingeschaltet werden und bei unterschiedlichen individuellen oberen Grenz drücken ausgeschaltet werden, wobei der Kompressor (5a) mit der höchsten Priorität aufgrund des höchsten unteren Grenzdrucks zuerst eingeschaltet wird und die in der Priorität folgenden Kompressoren (5b bis 5c) um je einen nächsthiedrigeren Differenzdruckwert versetzt später eingeschaltet werden.

5. Verfahren nach einem der vorstehenden Ansprüche,
**dadurch gekennzeichnet, daß** die Ansteuerung der Druckmittelversorgung innerhalb eines Zugverbandes zentral von einer übergeordneten Steuereinrichtung aus oder dezentral durch eine jedem Kompressor (5a bis 5c) zugeordnete Steuereinheit (6a bis 6c) vorgenommen wird.

6. Verfahren nach einem der vorstehenden Ansprüche,
**dadurch gekennzeichnet, daß** der aktuelle Druckmittelbedarf des Zugverbandes anhand des Drucks in der gememsamen durch alle Schienenfahrzeuge (1a bis 1c) geschleiften Hauptluft-behälterleitung (3) ermittelt wird.

7. Verfahren nach einem der vorstehenden Ansprüche,
**dadurch gekennzeichnet, daß** eine feste Prioritätsreihenfolge der Kompressoren (5a bis 5c) nach der Zusammenstellung der Schienenfahrzeuge (1a bis 1c) zu einem Zugverband unveränderbar definiert wird.

8. Verfahren nach Anspruch 1,
**dadurch gekennzeichnet, daß** für einen zeitgesteuerten Wechsel der Prioritätsreihenfolge während des Betriebes der Druckmittelversorgung der Kompressor (5a) mit der höchsten Priorität bei Erreichen einer definierten ununterbrochenen Betriebsdauer in die niedrigste Priorität versetzt wird und damit ausgeschaltet wird, wobei dieser Kompressor (5a) durch einen noch ausgeschalteten Kompressor (5b) mit der nächsthöheren Priorität ersetzt wird.

9. Verfahren nach Anspruch 1,
**dadurch gekennzeichnet, daß** für einen druckgesteuerten Wechsel der Prioritätsreihenfolge während des Betriebes der Druckmittelversorgung der Kompressor (5a) mit der höchsten Priorität bei Erreichen eines definierten Umschaltdruckwerts innerhalb der Hauptluftbehälterleitung (3) in die niedrigste Priorität versetzt wird und damit ausgeschaltet wird, wobei dieser Kompressor (5a) durch einen noch ausgeschalteten Kompressor (5b) mit der nächsthöheren Priorität ersetzt wird.

10. Verfahren nach Anspruch 1,
**dadurch gekennzeichnet, daß** für einen temperaturgesteuerten Wechsel der Prioritätsreihenfolge während des Betriebes der Druckmittelversorgung der Kompressor (5a) mit der höchsten Priorität bei Erreichen der Betriebstemperatur und nach Ablauf einer definierten Haltezeit in die niedrigste Priorität versetzt wird und damit ausgeschaltet wird, wobei dieser Kompressor (5a) durch einen noch ausgeschalteten Kompressor (5b) mit der nächsthöheren Priorität ersetzt wird.

11. Verfahren nach Anspruch 1,
**dadurch gekennzeichnet, daß** für einen feuchtigkeitsgesteuerten Wechsel der Prioritätsreihenfolge während des Betriebes der Druckmittelversorgung der Kompressor (5a) mit der höchsten Priorität bei Erreichen eines trockenen Betriebszustandes in die niedrigste Priorität versetzt wird und damit ausgeschaltet wird, wobei dieser Kompressor (5a) durch einen noch ausgeschalteten feuchten Kompressor (5c) ersetzt wird.

12. Vorrichtung zur Steuerung der Druckmittelversorgung bei Schienenfahrzeugen, welche innerhalb eines Zugverbandes mechanisch und druckmittelschlüssig miteinander gekoppelt sind und die Druckmittelversorgung über eine durch alle Schienenfahrzeuge (1a bis 1c) verlaufende gemeinsame Hauptluftbehälterleitung (3) erfolgt, die an den Koppelstellen der Schienenfahrzeuge (1a bis 1c) über Druckmittelkupplungen (4a, 4b) abschnittsweise verbunden ist, und die über mehrere Kompressoren (5a bis 5c) mit Druckmittel gespeist ist, wobei im wesentlichen in jedem Schienenfahrzeug (1a bis 1c) ein zugeordneter Kompressor (5a bis 5c) vorgesehen ist,
**dadurch gekennzeichnet, daß** Mittel zum Bestimmen einer Prioritätsreihenfolge für die Kompressoren (5a bis 5c) basierend auf der Gesamtanzahl der im Zugverband verfügbaren Kompressoren (5a bis 5c) vorgesehen sind, wobei Schaltmittel abhängig vom aktuellen Druckmittelbedarf nur diejenige Anzahl von Kompressoren (5a bis 5c) gemäß der Reihenfolge ihrer Priorität in Betrieb setzen, welche zur Deckung des aktuellen Druckmittelbedarfs erforderlich sind, wobei ferner ein Wechsel in der Prioritätsreihenfolge der Kompressoren (5a bis 5c) fest oder zufällig zeitgesteuert, druckgesteuert, temperaturgesteuert oder feuchtigkeitsgesteuert vorgenommen wird.

13. Vorrichtung nach Anspruch 12,
**dadurch gekennzeichnet, daß** zur Ermittlung des aktuellen Druckmittelbedarfs des Zugverbandes ein einziger oder ein mit einem Sicherheitsduplikat versehener und in der gemeinsamen durch alle Schienenfahrzeuge (1a bis 1c) geschleiften Hauptluftbehälterleitung (3) oder am Behälter eines Kompressors (5a bis 5c) angeordneter Drucksensor vorgesehen ist.

14. Vorrichtung nach Anspruch 12,
**dadurch gekennzeichnet, daß** die Mittel zum Bestimmen einer Prioritätsreihenfolge nach Art eines zentralen oder dezentralen elektrischen oder mechanischen Handwahlschalters ausgebildet sind.

15. Vorrichtung nach Anspruch 12,
**dadurch gekennzeichnet, daß** die Mittel zum Bestimmen einer Prioritätsreihenfolge als zentrale oder dezentrale elektronische Steuereinheit (6a bis 6c) ausgebildet sind.

16. Vorrichtung nach Anspruch 15,
**dadurch gekennzeichnet, daß** die elektronische Steuereinheit (6a bis 6c) über einen durch den Zugverband verlaufenden Datenbus mit den Schaltmitteln aller Kompressoren (5a bis 5c) zur Ansteuerung verbunden ist.

17. Vorrichtung nach Anspruch 12,
**dadurch gekennzeichnet, daß** die Schaltmittel der Kompressoren (5a bis 5c) nach Art eines einstellbaren automatischen Druckwächters ausgebildet sind.

## Claims

1. Method of controlling the supply of a pressurised medium on rail vehicles that are mechanically coupled to each other within one train unit with coupling in terms of pressurised medium, wherein the supply of pressurised medium is established via one common main air reservoir pipe (3) extending through all rail vehicles (1a to 1c), which is supplied with pressurised medium via several compressors (5a to 5c) provided individually essentially in each rail vehicle (1a to 1c),
**characterised in that** a succession or priorities is defined for said compressors (5a to 5c) in correspondence with the total number of compressors (5a to 5c) available in the train unit, with only that number of compressors (5a to 5c) being operated in correspondence with their priority as a function of the actual demand for pressurised medium, which is required to cover the actual demand for pressurised medium, wherein moreover a change in the succession of priorities of said compressors (5a to 5c) is performed invariably or at random under control in terms of time, pressure, temperature or moisture.

2. Method according to Claim 1,
**characterised in that** for replenishing quantities of pressurised medium, which have been consumed due to operation, in the case of a pressure drop linked up therewith in said main air reservoir pipe (3) below a defined lower threshold, initially the compressor (5c) having the next higher priority is operated in addition to compressors (5a, 5b) already started, and that when an upper threshold pressure is reached initially the operation of the compressor (5c) having the next lower priority is stopped again in an analogous manner among the started compressors.

3. Method according to Claim 1 or 2,
**characterised in that** when the supply of pressurised medium is started in the train unit, said compressors (5a to 5c) are started with different delays and that when said upper threshold pressure is reached their operation is stopped again with a delay, with the operation being started or stopped upon expiration of an interval determined as a function of the priority of each compressor (5a to 5c).

4. Method according to any of the preceding Claims,
**characterised in that** for establishing the succession of priorities of said compressors (5a to 5c), these compressors are started at different individual lower threshold pressure levels and are switched off at different individual upper threshold pressure levels, with the compressor (5a) having the highest priority being started first due to the highest lower threshold pressure whilst the compressors (5b to 5c) then joining by priority are started subsequently with a respective offset by a next lower differential pressure level.

5. Method according to any of the preceding Claims,
**characterised in that** the pressurised-medium supply within a train unit is controlled centrally from a higher-level controller or locally by a controller (6a to 6c) associated with each compressor (5a to 5c).

6. Method according to any of the preceding Claims,
**characterised in that** the actual demand for pressurised medium in the train unit is established with reference to the pressure in said common main air reservoir pipe (3) provided in a loop through all rail vehicles (1a to 1c).

7. Method according to any of the preceding Claims,
**characterised in that** a fixed succession of priorities of said compressors (5a to 5c) is invariable defined after marshalling of said rail vehicles (1a to 1c) to form a train unit.

8. Method according to Claim 1,
**characterised in that** for a change of the succession of priorities under control by time during the operation of the pressurised-medium supply, the compressor (5a) having the highest priority is changed over to the lowest priority when a defined continuous period of operation is reached, and is thus switched off, with this compressor (5a) being replaced by a compressor (5b) having the next higher priority, which is still in the switched-off condition.

9. Method according to Claim 1,
**characterised in that** for a change of the succession of priorities under control by pressure during the operation of the pressurised-medium supply, the compressor (5a) having the highest priority is changed over to the lowest priority when a defined change-over pressure level is reached within said main air reservoir pipe (3), and is thus switched off, with this compressor (5a) being replaced by a compressor (5b) having the next higher priority, which is still in the switched-off condition.

10. Method according to Claim 1,
**characterised in that** for a change of the succession of priorities under control by temperature during the operation of the pressurised-medium supply, said compressor (5a) having the highest priority is changed over to the lowest priority when the operating temperature has been reached and when a defined holding time has elapsed, and is thus switched off, with this compressor (5a) being replaced by a compressor (5b) having the next higher priority, which is still in the switched-off condition.

11. Method according to Claim 1,
**characterised in that** for a change of the succession of priorities under control by moisture during the operation of the pressurised-medium supply, said compressor (5a) having the highest priority is changed over to the lowest priority when a dry state of operation is reached, and is thus switched off, with this compressor (5a) being replaced by a moist compressor (5c) still in the switched-off condition.

12. Device for controlling the supply of a pressurised medium on rail vehicles that are mechanically coupled to each other within one train unit with coupling in terms of pressurised medium, wherein the supply of pressurised medium is established via one common main air reservoir pipe (3) extending through all rail vehicles (1a to 1c), which is supplied with pressurised medium via several compressors (5a to 5c) provided individually essentially in each rail vehicle (1a to 1c),
**characterised in that** means are provided for establishing a succession of priorities for said compressors (5a to 5c) on the basis of the total number of compressors (5a to 5c) available in the train unit, wherein switching means start the operation of only that number of compressors (5a to 5c) in correspondence with the succession of their priorities, as a function of the actual demand for pressurised medium, which are required to cover the actual demand for pressurised medium, wherein moreover a change in the succession of priorities of said compressors (5a to 5c) is performed invariably or at random under control in terms of time, pressure, temperature or moisture.

13. Device according to Claim 12,
**characterised in that** for determining the actual demand for pressurised medium in the train unit, a pressure sensor is provided either as single element or as an element provided with a duplicated safety element, which sensor is arranged in a common loop through all rail vehicles (1a to 1c) or arranged on the reservoir of a compressor (5a to 5c).

14. Device according to Claim 12,
**characterised in that** said means for determining a succession of priorities are configured in the manner of a central or a distributed electrical or mechanical manual selector switch.

15. Device according to Claim 12,
**characterised in that** said means for determining a succession of priorities are configured as a central or a distributed electronic controller (6a to 6c).

16. Device according to Claim 15,
**characterised in that** said electronic controller (6a to 6c) is connected to said switching means of all compressors (5a to 5c) for driving control via a data bus extending through the train unit.

17. Device according to Claim 12,
**characterised in that** said switching means of said compressors (5a to 5c) are configured in the manner of an adjustable automatic pressure regulator.

## Revendications

1. Procédé de commande de l'alimentation en fluide comprimé de véhicules sur rails, qui au sein d'un convoi sont couplés entre eux mécaniquement et du point de vue du fluide comprimé, l'alimentation en fluide comprimé étant ménagée par un conduit (3) commun, principal, formant récipient d'air, qui s'étend dans tous les véhicules (1a à 1c) sur rails et qui est alimenté en fluide comprimé par plusieurs compresseurs (5a à 5c) prévus individuellement sensiblement dans chaque véhicule (1a à 1c) sur rails,
**caractérisé en ce qu'**en fonction du nombre total des compresseurs (5a à 5c) disponibles dans le convoi, on définit un ordre de priorité pour les compresseurs (5a à 5b), seul le nombre de compresseurs (5a à 5b), qui est nécessaire pour couvrir les besoins instantanés en fluide comprimé étant, en fonction des besoins instantanés de fluide comprimé, mis en fonctionnement suivant l'ordre de leur priorité, un changement de l'ordre de priorité des compresseurs (5a à 5c) étant commandé de manière fixe ou aléatoire en fonction du temps, de la pression, de la température ou de l'humidité.

2. Procédé suivant la revendication 1,
**caractérisé en ce que**, pour compenser des consommations de fluide comprimé du au fonctionnement lors d'une perte de charge qui l'accompagne dans le conduit (3) principal formant récipient d'air et pour une valeur limite inférieure définie, on met, en plus des compresseurs (5a, 5b) déjà branchés, en fonctionnement d'abord le compresseur (5c) ayant la priorité la plus grande venant immédiatement ensuite, et **en ce que**, lorsque est atteinte une pression limite supérieure d'une manière analogue, on remet hors de fonctionnement parmi les compresseurs (5a à 5c) branchés, d'abord le compresseur (5c) ayant la priorité la plus petite venant immédiatement ensuite.

3. Procédé suivant la revendication 1 ou 2,
**caractérisé en ce que**, lors de la mise en fonctionnement de l'alimentation en fluide comprimé du convoi, on branche les compresseurs (5a à 5c) avec des retards différents dans le temps et, lorsque est atteinte la pression limite supérieure, on les redébranche avec des retards différents dans le temps, le branchement et le débranchement s'effectuant après l'écoulement d'un laps de temps fixé en fonction de la priorité de chaque compresseurs (5a à 5c).

4. Procédé suivant l'une des revendications précédentes,
**caractérisé en ce que**, pour fixer l'ordre de priorité des compresseurs (5a à 5c) on les branches à des pressions limites inférieures individuelles différentes et on les débranches à des pressions limites supérieures individuelles différentes, le compresseur (5a) ayant la priorité la plus grande étant branché d'abord en raison de la pression limite inférieure la plus grande et les compresseurs (5b à 5c) suivant dans la priorité étant branchés ultérieurement de manière décalée de respectivement une différence de pression immédiatement plus petite.

5. Procédé suivant l'une des revendications précédentes,
**caractérisé en ce que** la commande de l'alimentation en fluide comprimé s'effectue au sein du convoi de manière centralisée par une unité de commande supérieure hiérarchiquement ou de façon décentralisée par une unité (6a à 6b) de commande associée à chaque compresseur (5a à 5c).

6. Procédé suivant l'une des revendications précédentes,
**caractérisé en ce que** l'on détermine les besoins instantanés en fluide comprimé du convoi au moyen de la pression dans le conduit (3) principal formant récipient d'air, qui passe en commun dans tous les véhicules.(1a à 1c) sur rails.

7. Procédé suivant l'une des revendications précédentes,
**caractérisé en ce que** l'on définit, de manière intangible, un ordre de priorité fixe des compresseurs (5a à 5c) après la composition des véhicules (1a à 1c) sur rails en un convoi.

8. Procédé suivant la revendication 1,
**caractérisé en ce que**, pour une modification commandée en fonction du temps de l'ordre de priorité pendant le fonctionnement de l'alimentation en fluide comprimé, on donne au compresseur (5a) ayant la priorité la plus grande, lorsque est atteinte une durée de fonctionnement ininterrompu définie, la priorité la plus petite et ainsi on le débranche, ce compresseur (5a) étant remplacé par un compresseur (5b) encore débranché ayant la priorité la plus grande venant immédiatement ensuite.

9. Procédé suivant la revendication 1,
**caractérisé en ce que**, pour effectuer un changement commandé en fonction de la pression de l'ordre de priorité pendant le fonctionnement de l'alimentation en fluide comprimé, on donne au compresseur (5a) ayant la priorité la plus grande lorsqu'une valeur de pression et de commutation définie est atteinte dans le conduit (3) principal formant récipient d'air la priorité la plus petite et ainsi on le débranche, ce compresseur (5a) étant remplacé par un compresseur (5b) encore débranché ayant la priorité la plus grande venant immédiatement ensuite.

10. Procédé suivant la revendication 1,
**caractérisé en ce que**, pour effectuer un changement commandé en fonction de la température de l'ordre de priorité pendant le fonctionnement de l'alimentation en fluide comprimé, on donne au compresseur (5a) ayant la priorité la plus grande, lorsque la température de fonctionnement est atteinte et après expiration d'une durée de maintien définie, la priorité la plus petite et ainsi on le débranche, ce compresseur (5a) étant remplacé par un compresseur (5b) encore débranché ayant la priorité la plus grande venant immédiatement ensuite.

11. Procédé suivant la revendication 1,
**caractérisé en ce que**, pour effectuer un changement commandé en fonction de l'humidité de l'ordre de priorité pendant le fonctionnement de l'alimentation en fluide comprimé, on donne au compresseur (5a) ayant la priorité la plus grande, lorsqu'un état de fonctionnement sec est atteint, la priorité la plus petite et ainsi on le débranche, ce compresseur (5a) étant remplacé par un compresseur (5c) humide encore débranché.

12. Dispositif de commande de l'alimentation en fluide comprimé pour des véhicules sur rails, qui sont couplés au sein d'un convoi entre eux mécaniquement et du point de vue du fluide comprimé et l'alimentation en fluide comprimé s'effectuant par un conduit (3) principal formant récipient d'air commun passant dans tous les véhicules (1a à 1c) sur rails et communiquant par endroit avec les points d'accouplement des véhicules (1a à 1c) sur rails par des accouplements (4a, 4b) pour du fluide comprimé et qui est alimenté en fluide comprimé par plusieurs compresseurs (5a à 5c), un compresseur (5a à 5c) associé étant prévu sensiblement dans chaque véhicule (1a à 1c) sur rails,
**caractérisé par** des moyens de détermination d'un ordre de priorité des compresseurs (5a à 5c) fondé sur le nombre total des compresseurs (5a à 5c) disponibles dans le convoi, des moyens de commutation en fonction des besoins instantanés en fluide comprimé, ne mettant en fonctionnement suivant l'ordre de priorité que le nombre de compresseurs (5a à 5c) qui sont nécessaires pour couvrir les besoins instantanés en fluide comprimé, un changement de l'ordre de priorité des compresseurs (5a à 5c) étant effectué par une commande fixe ou aléatoire en fonction du temps, de la pression, de la température ou de l'humidité.

13. Procédé suivant la revendication 12,
**caractérisé en ce que**, pour la détermination des besoins instantanés en fluide comprimé du convoi, il est prévu un conduit (3) principal formant récipient d'air unique ou muni d'un double de sécurité et passant dans tous les véhicules (1a à 1c) sur rails ou un capteur de pression placé sur le corps d'un compresseur (5a à 5c).

14. Procédé suivant la revendication 12,
**caractérisé en ce que** les moyens de détermination d'un ordre de priorité sont constitués à la manière d'un sélecteur manuel électrique ou mécanique centralisé ou décentralisé.

15. Procédé suivant la revendication 12,
**caractérisé en ce que** les moyens de détermination d'un ordre de priorité sont constitués sous la forme d'une unité (6a à 6b) électronique de commande centralisée ou décentralisée.

16. Procédé suivant la revendication 15,
**caractérisé en ce que** l'unité (6a à 6b) électronique de commande est reliée par un bus de données, s'étendant dans le convoi, aux moyens de commutation de tous les compresseurs (5a à 5c) en vue de les commander.

17. Procédé suivant la revendication 12,
**caractérisé en ce que** les moyens de commutation des compresseurs (5a à 5c) sont constitués à la manière d'un dispositif automatique et réglable de contrôle de la pression.
